# FASCICULE DE BREVET EUROPEEN

(11) **EP 1 107 905 B1**
(45) Date de publication et mention de la délivrance du brevet: **21.05.2003**
(21) Numéro de dépôt: 99939491.9
(22) Date de dépôt: 24.08.1999
(51) Int. Cl.: B63C 13/00

(54) **EMBARCATION TRANSPORTABLE SUR ROUTE**
STRASSENTRANSPORTIERBARES WASSERFAHRZEUG
CRAFT TRANSPORTABLE BY ROAD

(30) Priorité: 25.08.1998 FR 9810667
(43) Date de publication de la demande: 20.06.2001
(73) Titulaire: Pavon, Salvador, 06600 Antibes (FR); Pavon, Christophe, 06140 Coursegoules (FR)
(72) Inventeur: Pavon, Salvador, 06600 Antibes (FR); Pavon, Christophe, 06140 Coursegoules (FR)
(74) Mandataire: Bonneau, Gérard
(86) Numéro de dépôt international: FR9902030
(87) Numéro de publication internationale: WO00010872

(56) Documents cités:
- FR-A- 2 568 215
- GB-A- 1 587 183
- US-A- 2 890 466
- US-A- 3 618 149
- US-A- 3 765 368

## Description

### Domaine technique

La présente invention est relative aux embarcations transportables derrière un véhicule au moyen de roues escamotables lorsque l'embarcation est sur l'eau.

### Etat de la technique

Les embarcations transportables sont de plus en plus répandues. Leurs utilisateurs les placent sur des remorques routières pour les transporter du lieu de garage à l'eau et vice versa. Lesdites remorques comportent des dispositifs relativement complexes pour manoeuvrer le bateau sur la cale de mise à l'eau qui est un plan incliné se trouvant sur la plupart des ports.

Il existe un très grand nombre de types de remorques avec des dispositifs de manutention les plus divers et plus ou moins compliqués. Presque tous ces dispositifs comportent un treuil et des rouleaux pour faire glisser le bateau à l'eau ou sur la remorque. Certain prévoient un châssis articulé. D'autre prévoient une deuxième remorque sur la première, cette deuxième remorque étant conçue pour pénétrer à l'eau, ou le bateau est complètement libéré.

Ces différents dispositifs présentent de nombreux inconvénients, parmi lesquels on peut citer la complexité de la manoeuvre, la complexité mécanique et le risque d'avarie que cela comporte, le temps de manoeuvre relativement long qui encombre la cale de mise à l'eau au détriment des autre usagers, le coût élevé d'une remorque qui s'ajoute au prix du bateau, et l'encombrement d'une remorque qu'il est difficile et onéreux de garer à proximité du port en plus du véhicule qui la tracte.

Pour remédier à ces inconvénients, il a été prévu des embarcations comportant des roues escamotables dans la coque comme c'est le cas de l'embarcation décrite dans FR-A-2.568.215. Chaque roue est actionnée par un moyen de levage propre constitué principalement d'un bras de levier dont une extrémité est directement fixée à l'axe de la roue et dont l'autre extrémité, directement manoeuvrable, peut être maintenue en place par un moyen de verrouillage aussi bien dans la position escamotée que dans la position de roulement.

Dans l'embarcation décrite dans FR-A-2.568.215, le logement où se trouve la roue est fermé par une trappe de façon à empêcher l'eau de s'engouffrer dans le logement ce qui constituerait un handicap certain pour la navigation. La trappe est maintenue en position fermée par un tendeur élastique et est repoussée en position ouverte lorsque la roue est sortie de son logement. Malheureusement il s'avère que cette trappe présente un certain nombre d'inconvénients majeurs. En effet, lorsque l'embarcation navigue sur l'eau, la vitesse produit une force d'aspiration de la trappe qui vient compenser la force du tendeur et entraîne l'ouverture de la trappe, permettant ainsi à l'eau de s'engouffrer dans le logement. Pour remédier à ce problème il est évidemment possible d'augmenter la tension du moyen de rappel, en l'occurrence du tendeur élastique. Mais dans ce cas, la force de tension importante nécessaire pour éviter l'ouverture de la trappe lors de la navigation empêche celle-ci d'être repoussée par la roue lors de la mise en position de roulement de l'embarcation.

Un autre inconvénient de la trappe utilisée dans FR-A-2.568.215 est que le tendeur élastique est tendu en permanence au maximum lorsque l'embarcation est parkée avec les roues sorties, ce qui fait perdre à la longue toute son efficacité au tendeur.

Enfin, lorsque l'embarcation est en position de roulement, la trappe est maintenue en position basse donc très près du sol avec les risques de chocs causés par les bosses et autres aménagements protubérants de la surface de roulement.

### Exposé de l'invention

C'est pourquoi le but de l'invention est de fournir une embarcation transportable sur route dont la trappe de logement de la roue soit solidaire du mécanisme d'escamotage de roue et non plus soumise à un moyen de rappel élastique.

L'objet de l'invention est donc une embarcation transportable sur route pour attelage derrière un véhicule, selon la revendication 1.

### Brève description des figures

Les buts, objets et caractéristiques de l'invention ressortiront clairement de la description qui suit faite en référence aux dessins joints dans lesquels :
la figure 1 est une vue en perspective d'une embarcation transportable faisant l'objet de l'invention,
la figure 2 est une vue en coupe transversale de l'embarcation au niveau des roues, lorsque l'embarcation est en position de roulement,
la figure 3 est une vue en coupe transversale de l'embarcation au niveau des roues, lorsque l'embarcation est en position d'escamotage des roues,
la figure 4 est une vue en coupe longitudinale montrant l'intérieur du logement de roue et son mécanisme, lorsque l'embarcation est en position de roulement,
la figure 5 est une vue en coupe longitudinale montrant l'intérieur du logement de roue et son mécanisme lorsque l'embarcation est en position d'escamotage des roues, et
la figure 6 est une coupe de l'amortisseur travaillant en traction.

### Description détaillée de l'invention

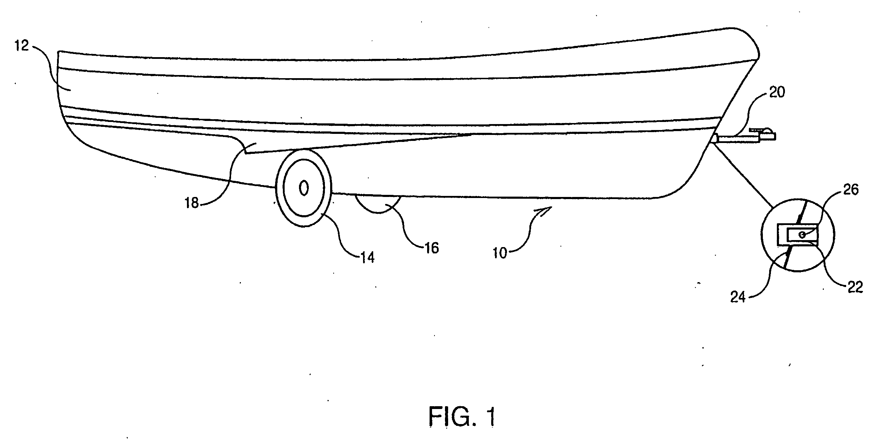

Comme illustré sur la figure 1, l'embarcation 10 en position de roulement comprend une coque 12 transportée grâce aux deux roues 14 et 16 qui sont escamotées lors de la navigation, dans des logements 18 (ou 18') dépassant légèrement en hauteur la carène de la coque. A la proue de l'embarcation, une barre d'attelage 20 permet d'accrocher l'embarcation derrière un engin motorisé. Comme illustré dans le cercle, la barre d'attelage 20 est démontable et peut se visser et se dévisser dans une pièce métallique 22 ayant un trou taraudé borgne pour éviter que l'eau entre à l'intérieur de l'embarcation. A cet endroit la coque comporte un renfort intérieur 24. En position de roulement, une goupille de sécurité 26 est placée sur la pièce métallique 22 lorsque la barre d'attelage 20 est vissée dans la pièce métallique.

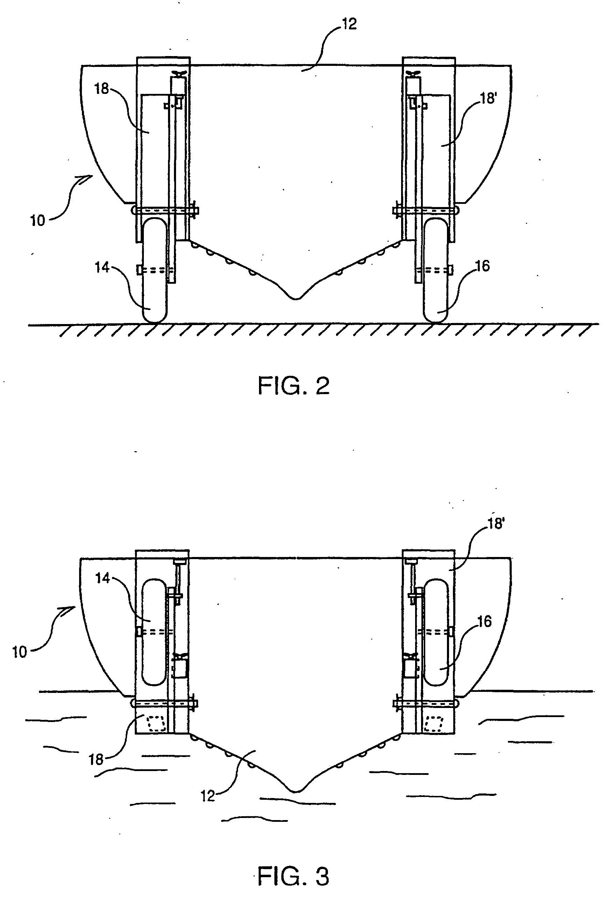

Comme on le voit sur la figure 2, la roue 14 ou 16 est complètement sortie de son logement 18 lorsque l'embarcation est en position de roulement pour être transportée en roulant sur les roues. Inversement, lorsque l'embarcation navigue, les roues 14 et 16 ont été escamotées dans leur logement 18 grâce au mécanisme perfectionné décrit ci-dessous.

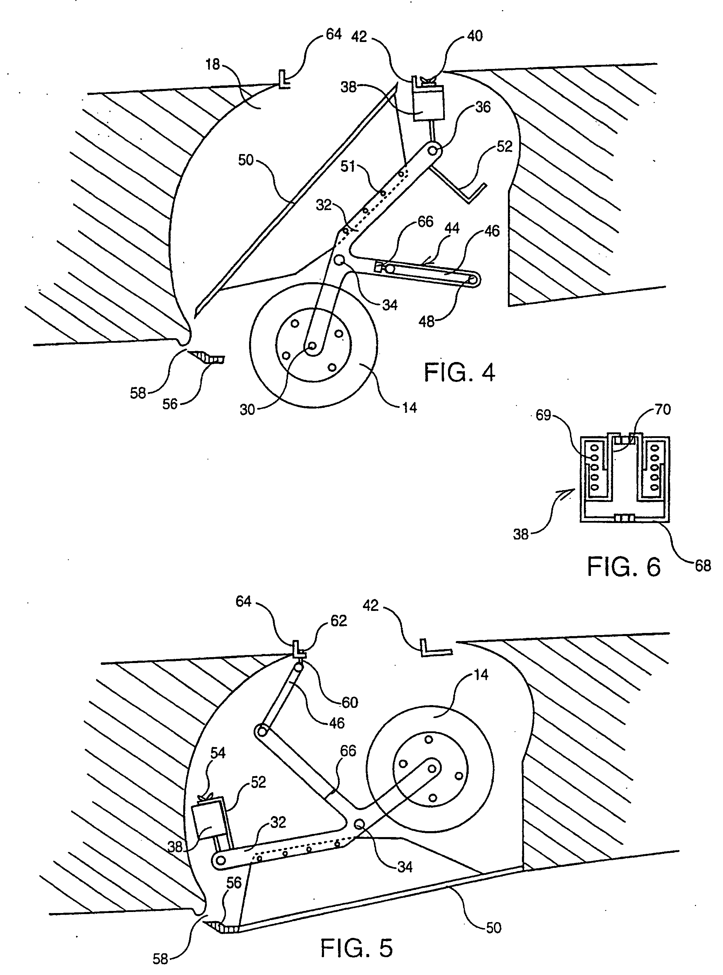

La figure 4 montre le mécanisme permettant aux roues d'être maintenues en position sur le sol. La roue 14 (ou 16) est reliée par son axe 30 à une première extrémité -d'un bras de levier 32 articulé autour d'un axe 34 solidaire de la coque 12. La deuxième extrémité du bras de levier 32 est reliée par un axe 36 à un amortisseur 38 travaillant en traction et qui est lui-même fixé à l'aide d'un écrou papillon 40 sur un support 42 solidaire de la coque. La fixation de cet écrou papillon permet ainsi de maintenir la roue en position de roulement sur le sol.

Un bras secondaire 44 du bras de levier 32 solidaire de ce dernier a son extrémité reliée à une bielle 46 par un axe 48. En position de roulement illustrée par la figure 4, la bielle est juxtaposée au bras secondaire 44.

Enfin, une trappe 50 qui constitue une caractéristique essentielle de l'invention, est solidaire du bras de levier 32 grâce à des vis ou tout autres moyens de fixation. Comme on le voit sur la figure, la trappe 50 se trouve ainsi à l'intérieur du logement 18 (ou 18') lorsque l'embarcation est en position de roulement, ce qui évite qu'elle puisse être en contact avec les protubérances du sol comme c'était le cas dans l'état de la technique le plus proche.

Pour passer à la position d'escamotage des roues illustrée sur la figure 5, on dévisse l'écrou papillon 40 du support 42 et on fait pivoter l'amortisseur 38 pour venir le fixer sur le support 52 qui est solidaire du bras de levier 32 au moyen d'un écrou papillon 54. On fait ensuite pivoter le bras de levier 32 autour de l'axe 34 jusqu'à ce que la trappe 50 vienne en butée sur un bossage 56. Dans cette position, la trappe 50 ferme complètement l'ouverture du logement en laissant un jeu minime autour ne permettant pas à l'eau de s'engouffrer dans le logement. Il existe toutefois une ouverture 58 à l'arrière de chaque logement 18 (ou 18') pour l'évacuation de l'eau quand l'embarcation commence à prendre de la vitesse de façon à éviter que la présence d'eau, même minime, augmente le poids de l'embarcation. On notera également que la paroi intérieure du logement 18 est en forme d'arc de cercle pour avoir un minimum d'eau dans le logement lorsque l'embarcation navigue.

Lorsque la roue 14 est en place dans son logement 18 et que la trappe est en butée contre le bossage 56, la bielle 46 est pivotée autour de l'axe 48 de sorte qu'une patte d'extrémité 60 puisse être fixée par un écrou papillon 62 sur un support 64 solidaire de la coque. On peut prévoir que la patte d'extrémité 60 puisse venir se fixer sur une patte 66 solidaire du bras secondaire 44 lorsque la roue est sortie et l'ensemble mis en position de roulement sur le sol.

Selon une caractéristique importante de l'invention l'amortisseur 38 représenté en coupe sur la figure 6, travaille en traction grâce à la présence d'un ressort à boudin 69 placé entre les parties 68 et 70 emboîtées l'une dans l'autre de telle sorte que le ressort est comprimé lorsque la partie 70 subit une traction par rapport à la partie 68. Ce travail en traction lorsque l'embarcation est en position de roulement sur le sol, est très importante dans la mesure où il permet une variation en élongation de l'amortisseur d'environ 5cm soit dix fois plus importante qu'un silent-bloc classique.

## Revendications

1. Embarcation (10) transportable sur route pour attelage derrière un véhicule, comprenant deux roues (14, 16) pouvant être sorties en position de roulement de leur logement (18, 18') par une ouverture de logement, chaque roue étant reliée par un axe (30) à une première extrémité d'un bras de levier (32), l'ensemble étant articulé sur un axe (34) solidaire de la coque (12), et la deuxième extrémité dudit bras de levier étant reliée par un axe (36) à un amortisseur fixé à un premier support (42) de manière à maintenir les roues en position sortie ;
ladite embarcation étant **caractérisée en ce qu'**elle comprend en outre,
- une trappe (50) solidaire dudit bras de levier venant, lorsque les roues sont escamotées dans ledit logement, en butée sur un bossage (56) de la coque après que ledit bras de levier a été pivoté autour dudit axe solidaire de la coque de façon à fermer complètement ladite ouverture et éviter aussi que l'eau ne s'engouffre dans ledit logement où se trouve la roue, et
- une ouverture (58) dans la coque située au-dessus de chaque bossage (56) pour laisser s'échapper l'eau quand l'embarcation navigue.

2. Embarcation (10) transportable sur route par attelage derrière un véhicule selon la revendication 1, dans laquelle ledit amortisseur (38) est libéré dudit premier support (42) pour permettre le pivotement dudit bras de levier (32) et ledit amortisseur est fixé sur un deuxième support (52) solidaire dudit bras de levier et ce dernier est fixé à un troisième support (64) solidaire de la coque lorsque ladite trappe (50) est venue en butée sur ledit bossage (58).

3. Embarcation (10) transportable sur route par attelage derrière un véhicule selon la revendication 2, dans laquelle ledit bras de levier (32) comporte un bras secondaire (44) disposant d'une bielle (46) articulée à son extrémité par un axe (48), l'extrémité de ladite bielle étant fixée audit troisième support (64) lorsque l'embarcation est en position d'escamotage des roues.

4. Embarcation (10) transportable sur route par attelage derrière un véhicule selon la revendication 1, 2 ou 3, **caractérisée en ce que** la disposition dudit bras de levier (32) et dudit amortisseur (38) à l'extrémité dudit bras de levier permet audit amortisseur de travailler en traction lorsque l'embarcation roule sur le sol.

5. Embarcation (10) transportable sur route par attelage derrière un véhicule selon la revendication 4, dans laquelle ledit amortisseur (38) comprend deux parties creuses (68, 70) emboîtées l'une dans l'autre et séparées par un ressort à boudin (69) travaillant en compression lorsque ledit amortisseur est soumis à une traction.

6. Embarcation (10) transportable sur route par attelage derrière un véhicule selon l'une des revendications 1 à 5, **caractérisée en ce que** la paroi intérieure desdits logements (18, 18') est en forme d'arc de cercle pour avoir un minimum d'eau dans lesdits logements (18, 18') quand l'embarcation navigue.

7. Embarcation (10) transportable sur route par attelage derrière un véhicule selon l'une des revendications 1 à 6 **caractérisée en ce que** chaque trappe (50) se fixe par des vis (52) ou tout autre moyen, sur ledit bras de levier (32).

8. Embarcation (10) transportable sur route par attelage derrière un véhicule selon l'une des revendications 1 à 7, **caractérisée en ce qu'**elle comprend en outre une pièce (22) solidaire de la coque (12) à l'aide d'un renfort (24) et possédant un trou taraudé borgne pour pouvoir visser la barre d'attelage 20 au véhicule en position de roulement.

## Claims

1. A craft (10) transportable by road by being hitched at the rear of a vehicle, comprising two wheels (14, 16) capable of being extended from their housing (18, 18') through an opening in the housing, each wheel being coupled by a shaft (30) to one first end of a lever arm (32), the assembly being articulated on a shaft (34) integral with the hull (12), and the second end of said lever arm being coupled by a shaft (36) to a shock absorber fixed to a first support (42) for maintaining the wheels in extended position;
said craft being **characterized in that** it also comprises,
- a trap door (50), integral with said lever arm, that comes to stop on a boss (56) of the hull when the wheels are retracted into said housing, after said lever arm has been pivoted around said shaft integral to the hull, so as to close said opening completely thereby preventing water from penetrating into said housing where the wheel is located, and
- an opening (58) in the hull located above each boss (56) to allow water to drain when the craft is under way.

2. The craft (10) transportable by road by being hitched at the rear of a vehicle according to claim 1, in which said shock absorber (38) is freed from said first support (42) to allow said lever arm (32) to pivot and said shock absorber is fixed on said second support (52) integral with said lever arm and the latter is fixed to a third support (64) integral with the hull when said trap door (50) comes to a stop on said boss (58).

3. The craft (10) transportable by road by being hitched at the rear of a vehicle according to claim 2, in which said lever arm (32) features a secondary arm (44) equipped with a connecting rod (46) articulated at its end by a shaft (48), the end of said connecting rod being fixed to said third support (64) when the craft is in "wheels retracted" position.

4. The craft (10) transportable by road being hitched at the rear of a vehicle according to claim 1, 2 or 3, **characterized in that** the arrangement of said lever arm (32) and said shock absorber (38) at the end of said lever arm allows said shock absorber to work in traction when the craft is rolling on the ground.

5. The craft (10) transportable by road by being hitched at the rear of a vehicle according to claim 4, in which said shock absorber (38) includes two hollow parts (68, 70) fitted together and separated by a coil spring (69) working in compression when said shock absorber is subjected to a tension force.

6. The craft (10) transportable by road by being hitched at the rear or a vehicle according to any one of claims I to 5, **characterized in that** the inside wall of said housings (18, 18') is in the shape of an arc in order to have a minimum quantity of water in said housings (18, 18') when the craft is under way.

7. The craft (10) transportable by road by being hitched at the rear of a vehicle according to any one of claims 1 to 6, **characterized in that** each trap door (50) is fixed by screws (52) or any other means, onto said lever arm (32).

8. The craft (10) transportable by road by being hitched at the rear of a vehicle according to any one of claims 1 to 7, **characterized in that** it also includes a part (22) integral with the hull (12) by means of reinforcement (24) and having a tapped blind hole to be able to screw in the draw bar 20 connected to the vehicle in running position.

## Patentansprüche

1. Boot (10), das durch Ankopplung hinter einem Fahrzeug auf der Straße transportierbar ist, umfassend zwei Räder (14, 15), die aus ihrer Aufnahme (18, 18') über eine Öffnung der Aufnahme in die Fahrstellung ausgefahren werden können, wobei jedes Rad durch eine Achse (30) mit einem ersten Ende eines Hebelarms (32) verbunden ist, die Einheit an einer mit dem Rumpf (12) fest verbundenen Achse (34) angelenkt ist und das zweite Ende des Hebelarms durch eine Achse (36) mit einem Dämpfer verbunden ist, der an einem ersten Halter (42) befestigt ist, so daß die Räder in ausgefahrener Stellung gehalten werden,
wobei dieses Boot **dadurch gekennzeichnet ist, daß** es außerdem folgendes umfaßt:
- eine mit dem Hebelarm fest verbundene Klappe (50), die, wenn die Räder in die Aufnahme versenkt sind, an einem Vorsprung (56) des Rumpfs in Anschlag kommt, nachdem der Hebelarm um die mit dem Rumpf fest verbundene Achse verschwenkt wurde, so daß die Öffnung vollständig geschlossen ist und das Einstürzen von Wasser in die Aufnahme, in der sich das Rad befindet, verhindert wird, und
- eine Öffnung (58) in dem Rumpf, die über jedem Vorsprung (56) gelegen ist, um das Wasser abfließen zu lassen, wenn das Boot schwimmt.

2. Boot (10), das durch Ankopplung hinter einem Fahrzeug auf der Straße transportierbar ist, nach Anspruch 1, bei dem der Dämpfer (38) von dem ersten Halter (42) freigegeben wird, um das Verschwenken des Hebelarms (32) zu gestatten, und der Dämpfer an einem zweiten Halter (52) befestigt ist, der mit dem Hebelarm fest verbunden ist, und dieser an einem dritten, mit dem Rumpf fest verbundenen Halter (64) befestigt ist, wenn die Klappe (50) an dem Vorsprung (58) in Anschlag gekommen ist.

3. Boot (10), das durch Ankopplung hinter einem Fahrzeug auf der Straße transportierbar ist, nach Anspruch 2, bei dem der Hebelarm (32) einen Nebenarm (44) aufweist, der über eine Pleuelstange (46) verfügt, die an seinem Ende über eine Achse (48) angelenkt ist, wobei das Ende der Pleuelstange an dem dritten Halter (64) befestigt ist, wenn die Räder des Boots in der eingezogenen Stellung sind.

4. Boot (10), das durch Ankopplung hinter einem Fahrzeug auf der Straße transportierbar ist, nach Anspruch 1, 2 oder 3, **dadurch gekennzeichnet, daß** die Anordnung des Hebelarms (32) und des Dämpfers (38) am Ende des Hebelarms dem Dämpfer gestattet, auf Zug zu arbeiten, wenn des Boot auf dem Boden rollt.

5. Boot (10), das durch Ankopplung hinter einem Fahrzeug auf der Straße transportierbar ist, nach Anspruch 4, bei dem der Dämpfer (38) zwei ineinander gesteckte hohle Teile (68, 70) aufweist, die durch eine Schraubenfeder (69) getrennt sind, die auf Druck arbeitet, wenn der Dämpfer einem Zug ausgesetzt ist.

6. Boot (10), das durch Ankopplung hinter einem Fahrzeug auf der Straße transportierbar ist, nach einem der Ansprüche 1 bis 5, **dadurch gekennzeichnet, daß** die Innenwand der Aufnahmen (18, 18') kreisbogenförmig ist, damit in den Aufnahmen (18, 18') ein Minimum an Wasser vorhanden ist, wenn das Boot schwimmt.

7. Boot (10), das durch Ankopplung hinter einem Fahrzeug auf der Straße transportierbar ist, nach einem der Ansprüche 1 bis 6, **dadurch gekennzeichnet, daß** jede Klappe (50) durch Schrauben (52) oder irgendein anderes Mittel an dem Hebelarm (32) befestigt ist.

8. Boot (10), das durch Ankopplung hinter einem Fahrzeug auf der Straße transportierbar ist, nach einem der Ansprüche 1 bis 7, **dadurch gekennzeichnet, daß** es außerdem ein Teil (22) aufweist, das mit Hilfe einer Verstärkung (24) mit dem Rumpf (12) fest verbunden ist und ein mit Gewinde versehenes Sackloch aufweist, um die Stange (20) zum Ankoppeln an das Fahrzeug in der Fahrstellung festschrauben zu können.
